# EUROPÄISCHE PATENTSCHRIFT

(11) **EP 1 734 383 B1**
(45) Veröffentlichungstag und Bekanntmachung des Hinweises auf die Patenterteilung: **29.10.2008**
(21) Anmeldenummer: 06010243.1
(22) Anmeldetag: 18.05.2006
(51) Int. Cl.: G01V 8/20

(54) **Lichtgitter zur Vermessung eines Objekts**
Light grid for measuring an object
Barrière lumineuse destinée à la mesure d'un objet

(30) Priorität: 16.06.2005 DE 202005009517 U
(43) Veröffentlichungstag der Anmeldung: 20.12.2006
(73) Patentinhaber: SICK AG, 79183 Waldkirch (DE)
(72) Erfinder: Pirkl, Klaus, 64572 Büttelborn (DE)

(56) Entgegenhaltungen:
- EP-A- 0 964 273
- DE-U1-7202005 009 51

## Beschreibung

Die Erfindung betrifft ein Lichtgitter zur Vermessung eines Objektes und zur Absicherung eines Gefahrenbereiches einer Maschine nach dem Oberbegriff des Anspruchs 1.

Aus der DE 694 07 784 T2 ist ein System zum Erfassen und Beurteilen der Art und Lage eines Objekts, das einen oder mehrere Strahlen passiert und dadurch unterbricht, bekannt. Das System weist Mittel zum Erzeugen einer Matrix von Strahlen auf. Diese Strahlen schneiden sich gegenseitig, um ein netzartiges Muster von Strahlen zu bilden. Ferner weist das System Mittel zum Erzeugen von Informationen bezüglich eines oder mehrerer durch ein eindringendes Objekt unterbrochener Strahlen auf und einen Analysator, dem diese Information von den informationserzeugenden Mitteln zuführbar ist, um aus dieser Information die generelle Art und Lage eines Objekts zu bestimmen, welches den oder die Strahlen unterbrochen hat. Der Analysator ist so ausgebildet, dass er die Informationen verwendet, um ein Raumgebiet zu konstruieren, welches von den nichtunterbrochenen Strahlen berandet ist, innerhalb dessen das eindringende Objekt liegt, um dessen Form und Größe in geeigneter Näherung zu bestimmen.

Dieses System zum Erfassen und Beurteilen der Art und Lage eines Objekts weist jedoch wesentliche Nachteile auf. So werden zur Abtastung schmale und fokussierte Strahlen verwendet. Diese schmalen und fokussierten Strahlen haben den Nachteil, dass das System sehr genau ausgerichtet werden muss. Nur bei einer genauen Ausrichtung treffen die gesendeten Strahlen auf einen Empfänger. Bei einer Dejustierung des Empfängers oder eines Senders ist das System nicht mehr verfügbar und muss neu ausgerichtet werden.

Weiterhin sind Sender und Empfänger abwechselnd nebeneinander angeordnet. Dies führt zu einer aufwendigen Ansteuerung der gemischt angebrachten Sender und Empfänger. So müssen z. B. die Ergebnisse der einzelnen Empfänger an den Analysator zur Auswertung übermittelt werden. Auch die Ansteuerung der einzelnen Sender ist aufwendig, da diese an unterschiedlichen Leisten angebracht sind.

Weiter ist die EP 0 964 273 A2 bekannt. Darin ist ein Flächensensor mit einem Lichtsender mit einer Vielzahl von Lichtsendeelementen zum Aussenden von Licht und einem Lichtempfänger mit Lichtempfangselementen, welche den Lichtsendeelementen zugeordnet sind, zum Empfangen des Lichts offenbart. Dabei weist wenigstens ein Sende- und/oder Empfangselement einen kleineren Sende- bzw. Empfangswinkel auf als die anderen Sende- und Empfangselemente.

Der Erfindung liegt die Aufgabe zugrunde, ein verbessertes Lichtgitter zur Vermessung eines Objektes und zur Absicherung eines Gefahrenbereiches einer Maschine bereitzustellen.

Die Aufgabe wird erfindungsgemäß nach Anspruch 1 mit einem Lichtgitter zur Vermessung eines Objektes und zur Absicherung eines Gefahrenbereiches einer Maschine gelöst. Das Lichtgitter besteht aus einer Sendeeinheit mit einzelnen Sendeelementen zum Aussenden einer Mehrzahl in einer Ebene verlaufenden Lichtstrahlen in Form von Sendelichtkeulen und einer zur Sendeeinheit beabstandeten Empfangseinheit mit einzelnen Empfangselementen zum Empfangen der Lichtstrahlen aus Empfangslichtkeulen, wodurch zwischen der Sende- und Empfangseinheit ein Schutzfeld definiert ist. Die Sendeeinheit und/oder Empfangseinheit weisen jeweils wenigstens zwei verschieden ausgebildete Optiken auf zum Bilden der Sende- und/oder Empfangslichtkeulen. Eine erste Optik bildet dabei eine erste Sendelichtkeule und/oder eine erste Empfangslichtkeule, deren Ausdehnung in Richtung der Ebene eine größere ist als quer dazu. Eine zweite Optik bildet eine zweite Sendelichtkeule und eine zweite Empfangslichtkeule mit etwa kreisförmigem Querschnitt. Die beiden Optiken sind abwechselnd mit zueinander beabstandeten und in etwa in der Ebene liegenden optischen Achsen in der Sendeeinheit bzw. Empfangseinheit angeordnet.

Durch die Ausdehnung der einen Sorte der Sende- bzw. Empfangslichtkeule in Richtung der Ebene ist es möglich, dass Sendelichtstrahlen von mehreren Empfangselementen empfangen werden können, bzw. dass von mehreren Sendeelementen Licht in nur ein Empfangselement gelangen kann. Auf diese Weise ist es möglich überkreuz verlaufende Strahlen zur genauen Vermessung von Objekten in der Ebene zwischen Sendeeinheit und Empfangseinheit zu erzeugen und zu empfangen.

Der Vorteil des erfindungsgemäßen Lichtgitters liegt in einer hohen Verfügbarkeit der Sende- und Empfangseinheit zueinander. Durch den Querschnitt der Sendelichtkeulen bzw. der Empfangslichtkeulen ist das System einfach auszurichten. Der Querschnitt führt zu einer Ausrichttoleranz und erhöht die Verfügbarkeit des Lichtgitters deutlich.

Durch die Reduzierung der Ausdehnung der Sende- oder Empfangslichtkeule quer zur Ebene ist das Risiko minimiert, den Strahlengang mit in der Nähe zur optischen Achse parallel zur Ebene evtl. vorhandenen spiegelnden Flächen zu manipulieren. Gerade beim Einsatz des Lichtgitters an Maschinen mit metallisch spiegelnden Flächen ist dies sehr wichtig.

Weiterhin sind die zweiten Optiken vorhanden, die einen kreisförmigen Querschnitt der Empfangslichtkeule oder der Sendelichtkeule aufweisen. Die Ausführung dieser Sende- und Empfangslichtkeule ist insbesondere bei der Detektierung von Objekten oder Personen in der Sicherheitstechnik wichtig. Bei Absicherungen von Gefahrenbereichen mit Lichtgittern in der Sicherheitstechnik sollen Lichtstrahlen möglichst von einem Sendeelement zu einem direkt gegenüberliegenden Empfangselement gelangen. Eine Beeinflussung benachbarter Empfangselemente durch ein einziges Sendeelement soll nicht stattfinden. Dies wird durch den kreisförmigen Querschnitt der Sende- bzw. Empfangslichtkeule der zweiten Art erreicht.

Damit ist es mit dem erfindungsgemäßen Lichtgitter sowohl möglich eine genaue Objektvermessung durchzuführen, nämlich mit den Lichtstrahlen erster Art, als auch einen Gefahrbereich zum Schutz von Personen abzusichern, nämlich mit den Lichtstrahlen zweiter Art.

Die erste Optik ist vorteilhaft als Zylinderoptik mit einer Zylinderachse ausgebildet. Dies hat den Vorteil, dass mit Zylinderlinsen sehr preiswert und einfach eine Sende-oder Empfangslichtkeule mit unterschiedlichen Abmessungen senkrecht zueinander erzeugbar ist.

Die Zylinderachsen der Zylinderoptiken sind dabei parallel und beabstandet voneinander angeordnet. Durch diese Ausrichtung wird die längere Abmessung der Sende- oder Empfangslichtkeule auf mehrere gegenüberliegende Optiken ausgerichtet.

Die erste Optik kann auch vorteilhaft als torische Optik ausgebildet werden. Mit Hilfe dieser Optik lässt sich vorteilhaft eine noch gleichmäßigere Lichtverteilung innerhalb des Querschnittes der Sende- oder Empfangslichtkeule erreichen.

Die erste Optik und/oder die zweite Optik können jeweils nur eine Linse aufweisen. Dadurch ist die Optik sehr einfach und kostengünstig ausgebildet, mit nur einer einzigen Linse pro Sende- und/oder Empfangselement. Die Form der Sende- und Empfangslichtkeule kann dabei mit nur einer Linse bewerkstelligt werden. Es sind keine zusätzlichen optischen Komponenten notwendig.

Vorteilhaft sind die erste Optik und die zweite Optik einzeln abwechselnd nacheinander angeordnet. Dies ist die einfachste Variante, um über das gesamte Schutzfeld gleichmäßig sowohl Lichtstrahlen der ersten Art mit einer in der Ebene liegenden größeren Ausdehnung, als auch Lichtstrahlen der zweiten Art mit kreisförmigen Querschnitten zur Überwachungsfunktion zu erzeugen. Damit dient das gesamte Schutzfeld einerseits zur Vermessung der Objekte und ermöglicht die genaue Bestimmung der Form eines Querschnitts des Objekts und andererseits zur Absicherung eines Gefahrenbereiches und zur sicheren Erkennung des Eindringens der Objekte.

Die mit der zweiten Optik erzeugte Sende- bzw. Empfangslichtkeule weist einen Öffnungswinkel von vorzugsweise etwa 2° bis 5° auf. Durch die Reduzierung des Öffnungswinkels auf vorzugsweise etwa 2° bis 5° ist die Möglichkeit eingeschränkt, den Strahlengang mit in der Nähe zur optischen Achse liegenden oder angeordneten spiegelnden Flächen zu manipulieren oder zu beeinflussen. Insbesondere bei der Verwendung von Lichtgittern an Industrieanlagen mit metallisch spiegelnden Maschinenteilen können mit der Einschränkung des Öffnungswinkels auf vorzugsweise 2° bis 5° unerwünschte optische Strahlbeeinflussungen durch Reflexionen vermieden werden.

Zur Reduzierung der Ausdehnung der Sende- und/oder Empfangslichtkeule kann zusätzlich eine Schlitzblende vorgesehen werden. Mit der Schlitzblende ist es möglich, die Ausdehnung und Form des Strahlungsprofils einfach und kostengünstig zu gestalten. Insbesondere können bei unveränderter Linsenform verschieden geformte Sende- bzw. Empfangslichtkeulen gebildet werden.

In einer weiteren Ausführungsform des Lichtgitters sind vorteilhaft wenigstens eine der ersten Optiken und wenigstens eine der zweiten Optiken einstückig zu einem Optikmodul zusammengefasst. Dadurch ist es weiter möglich die Kosten für das Lichtgitter zu reduzieren. Bei einer Vielzahl von Strahlen ermöglichen solche Optikmodule die integrierten Optiken einfach anzuordnen. Die Optiken sind in dem Optikmodul schon ausgerichtet und durch eine Montage mit dem richtigen Abstand zu den Empfangs- bzw. Sendeelementen angeordnet. In den Optikmodulen können auch eine Vielzahl von Optiken zusammengefasst sein.

Die Optikmodule weisen vorteilhaft Verbindungsstellen auf zur gegenseitigen Befestigung längs aneinander. Dadurch ist ein modularer Aufbau von Lichtgittern mit verschiedenen Längen möglich. Die Optikmodule haben dabei vorteilhaft eine Länge, die verschiedenen Abstufungen der Länge der Lichtgitter entspricht. Die Lichtgitter können so für verschiedene Anwendungen aus gleichen Komponenten gefertigt werden.

Zur Vermessung des Objekts mit den in der Ebene verlaufenden Lichtstrahlen ist eine Ansteuer- und Auswerteeinheit vorhanden. Die Ansteuer- und Auswerteeinheit ist mit der Sendeeinheit und der Empfangseinheit verbunden zur Aktivierung der Sende- und Empfangselemente. Bei Aktivierung eines Sendeelements wertet die Ansteuer- und Auswerteeinheit nacheinander mehrere Empfangselemente aus oder umgekehrt wird bei Aktivierung eines Empfangselements mehrere Sendeelemente nacheinander angesteuert. Dadurch ist es möglich genaue Abmessungen als Objektkonturdaten des Objektes wie beispielsweise eine Breite, eine Höhe, einen Durchmesser oder eines Winkels einer Objektoberkante zu ermitteln. Werden diese Objektkonturdaten mit aufgenommenen Objektkonturdaten aus vorangegangenen Messungen an diesem Objekt verglichen, kann vorteilhaft die Länge des Objektes oder das Volumen des Objektes bestimmt werden. Bei einer wiederholenden Abtastung über einen längeren Zeitraum und mehreren Objekten kann auch die Anzahl der Objekte bestimmt werden.

Zu den erfassten Objektkonturdaten können in einem Speicher bekannte Objektkonturdaten als Referenzwerte abgelegt werden. Weiterhin ist eine Vergleichseinheit vorhanden, die mit dem Speicher und der Ansteuer- und Auswerteeinheit verbunden ist, um erfasste Objektkonturdaten mit den gespeicherten Objektkonturdaten zu vergleichen, und abhängig von dem Vergleich mindestens ein Steuersignal auszugeben. Aus diesem Vergleich lässt sich vorteilhaft ermitteln, ob das Objekt als zulässig oder unzulässig eingestuft werden kann. So können zum Beispiel Objekte oder Transportgüter, die zur Weiterverarbeitung durch das Schutzfeld an eine Maschine transportiert werden sollen als zulässig eingestuft werden. Personen, die durch die gefahrbringende Bewegung der Maschine zu Schaden kommen können werden hingegen als unzulässig eingestuft.

Zusätzlich ist eine Überbrückungseinrichtung vorhanden, die mit der Ansteuer- und Auswerteeinheit verbunden ist, um die Auswertung der Empfangselemente der zweiten Optik aufgrund des Steuersignals der Vergleichseinheit zu überbrücken. Dadurch ist es möglich das zweite Schutzfeld, welches zur Absicherung des Gefahrenbereiches dient und eine Sicherheitsfunktion darstellt, zu überbrücken und das zulässige Objekt das Schutzfeld passieren zu lassen.

Die Überbrückungseinrichtung ist dabei nur zeitlich begrenzt aktiviert. Nachdem das Objekt das Schutzfeld passiert hat werden die Empfangselemente der zweiten Optik wieder ausgewertet und ein evtl. unzulässiges Objekt wird erkannt und eine Maschine zur Bearbeitung der Objekte aus Sicherheitsgründen zum Schutz von möglicherweise eintretenden Personen gestoppt. Hierzu ist eine Schalteinheit vorhanden, die mit der Vergleichseinheit verbunden ist zur Stillsetzung einer gefahrbringenden Bewegung der Maschine.

Im Folgenden wird die Erfindung an Hand von Ausführungsbeispielen unter Bezugnahme auf die Zeichnung im Einzelnen erläutert.

In der Zeichnung zeigt:
- Figur 1;: eine schematische Darstellung eines erfindungsgemäßen Lichtgitters;
- Figur 2;: einen Querschnitt entlang der Linie I - I aus Figur 1;
- Figur 3;: einen Querschnitt entlang der Linie II - II aus Figur 1;
- Figur 4;: eine weitere schematische Darstellung des erfindungsgemäßen Lichtgitters zur Vermessung eines Objekts.

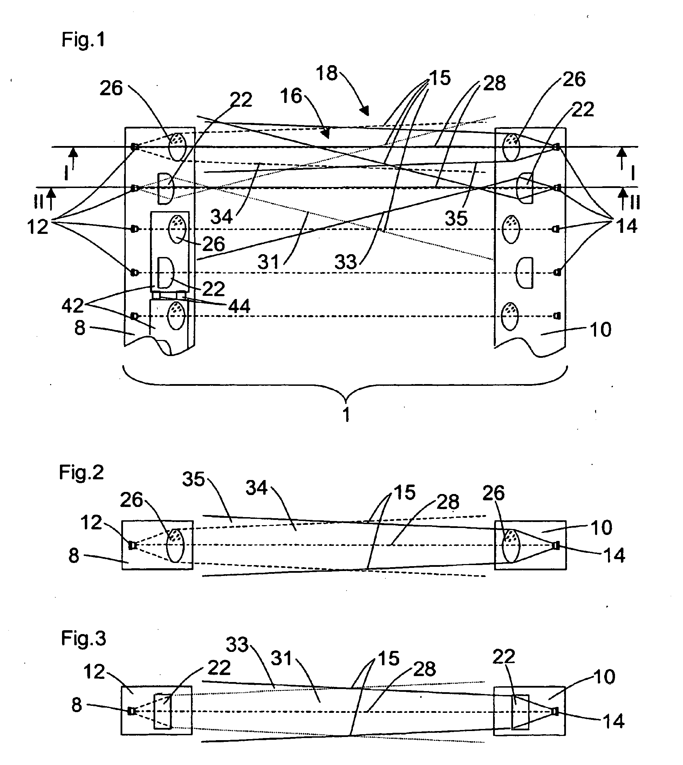

Figur 1 zeigt ein erfindungsgemäßes Lichtgitter 1 mit einer Sendeeinheit 8 und einer Empfangseinheit 10. Die Sendeeinheit 8 und die Empfangseinheit 10 sind dabei beabstandet und gegenüberliegend zueinander angeordnet. In der Sendeeinheit 8 und in der Empfangseinheit 10 sind jeweils eine erste Optik 22 und eine zweite Optik 26 abwechselnd nebeneinander angeordnet. Die ersten Optiken 22 der Sendeeinheit 8 und die der Empfangseinheit 10 sind vorzugsweise identisch ausgebildet.

Gleiches gilt für die zweiten Optiken 26, weshalb die ersten und zweiten Optiken der Sende- bzw. Empfangseinheit in der Zeichnung gleiche Bezugszeichen tragen. Die optischen Achsen 28 der Optiken der Sendeeinheit 8 sind dabei etwa auf die optischen Achsen 28 der jeweils gegenüberliegenden Optiken der Empfangseinheit 10 ausgerichtet.

Den Optiken in der Sendeeinheit 8 ist jeweils ein Sendeelement 12 zugeordnet. Das Sendelement 12 ist auf der optischen Achse 28 der betreffenden Optik liegend in einem Abstand zu der Optik angebracht. Auf der gegenüberliegenden Seite ist den Optiken in der Empfangseinheit 10 jeweils ein Empfangselement 14 zugeordnet. Das Empfangselement 14 ist auch auf der optischen Achse 28 der betreffenden Optik liegend in einem Abstand zu der Optik angebracht.

Ausgehend von dem Sendeelement 12 werden über die zugeordneten Optiken Lichtstrahlen 15 ausgesendet. Die Lichtstrahlen 15 werden von den gegenüberliegenden Optiken auf die zugehörigen Empfangselemente 14 umgeleitet. Die ausgesendeten Lichtstrahlen bilden zwischen der Sendeeinheit 8 und der Empfangseinheit 10 eine Ebene 16, wodurch ein Schutzfeld 18 definiert ist.

Bei den ersten und zweiten Optiken 22 und 26 handelt es sich um zwei verschieden ausgebildete Optiken. Die erste Optik 22 bildet aus den in der Ebene 16 verlaufenden Lichtstrahlen 15 eine erste Sende- bzw. Empfangslichtkeule 31 bzw. 33, deren Ausdehnung in Richtung der Ebene 16 der ausgesendeten Lichtstrahlen 15 eine größere ist als quer dazu. Die erste Optik 22 ist dabei vorzugsweise als Zylinderoptik mit einer Zylinderachse ausgebildet. Mit der Zylinderoptik ist es sehr einfach möglich, die unterschiedlich großen Ausdehnungen des Querschnitts der ersten Sende- bzw. Empfangslichtkeule 31 bzw. 33 zur realisieren. Die Zylinderachsen der Zylinderoptiken sind dabei parallel beabstandet und quer zu der Ebene 16 angeordnet. Die Zylinderoptik ist dabei als einzelne Zylinderlinse ausgebildet. Dadurch ist die Zylinderoptik sehr einfach und kostengünstig realisierbar.

Die zweite Optik 22 bildet aus den in der Ebene 16 verlaufenden Lichtstrahlen eine zweite Sende- bzw. Empfangslichtkeule 34 bzw. 35 mit einem etwa kreisförmigen Querschnitt. Ein Öffnungswinkel der zweiten Sende- bzw. Empfangslichtkeule 34 bzw. 35 beträgt dabei vorzugsweise etwa 2° bis 5° insbesondere 2,5°. Dadurch ist gewährleistet, dass spiegelnde Flächen, die sich evtl. in der Nähe des Lichtgitters 1 befinden können, nicht zu einer Umlenkung seitlicher Lichtstrahlen 15 auf die Empfangseinheit 10 führen. Die zweite Optik 26 ist bevorzugt als einzelne Linse ausgebildet.

Die Querschnitte entlang der Linie I - I, dargestellt in Figur 2, und der Linie II - II, dargestellt in Figur 3, bezogen auf die Darstellung aus Figur 1 zeigen die Formen der Sende- bzw. Empfangslichtkeulen 31, 33, 34, 35 senkrecht zu der Darstellung in Figur 1. Der Öffnungswinkel der Sende- und Empfangslichtkeulen 31, 33, 34, 35 der ersten bzw. zweiten Optiken 22 bzw. 26 quer zum Schutzfeld 18 sind dabei gleich weit aufgeweitet. Störeinflüsse wie z. B. Fremdlicht werden durch den kleinen Öffnungswinkel der Empfangslichtkeule 14 reduziert.

Wie in Figur 1 dargestellt sind die Optiken beabstandet voneinander angeordnet. In diesem Ausführungsbeispiel ist dabei jeweils eine einzelne erste Optik 22 und eine einzelne zweite Optik 26 nacheinander abwechselnd in der Sendeeinheit 8 bzw. in der Empfangseinheit 10 angeordnet. Es ist aber auch möglich eine unterschiedliche Anzahl von ersten Optiken 22 abwechselnd mit einer Anzahl von zweiten Optiken 26 anzuordnen, zum Beispiel jeweils zwei erste Optiken 22 abwechselnd mit jeweils zwei zweiten Optiken 26 oder nur eine erste Optik 22 abwechselnd mit je zwei zweiten Optiken 26 oder umgekehrt. Weitere unterschiedliche Anordnungen sind denkbar.

Vorzugsweise sind die erste Optik 22 und die zweite Optik 26 in einem Optikmodul 42 zusammengefasst. In dem Optikmodul 42 können dabei eine Vielzahl von Optiken angeordnet sein. Dadurch sind die einzelnen Optiken bereits untereinander ausgerichtet. Bei Lichtgittern 1 mit einer Vielzahl von einzelnen Sendelementen 12 und Empfangselementen 14 wird dadurch der Aufbau und die Herstellung des Lichtgitters 1 deutlich vereinfacht. Die Optikmodule 42 sind dabei an vorhandenen Verbindungsstellen 44 miteinander verbunden. So wird aus den einzelnen Optikmodulen 42 eine Optikkette mit einer Vielzahl von Optikmodulen 42 gebildet.

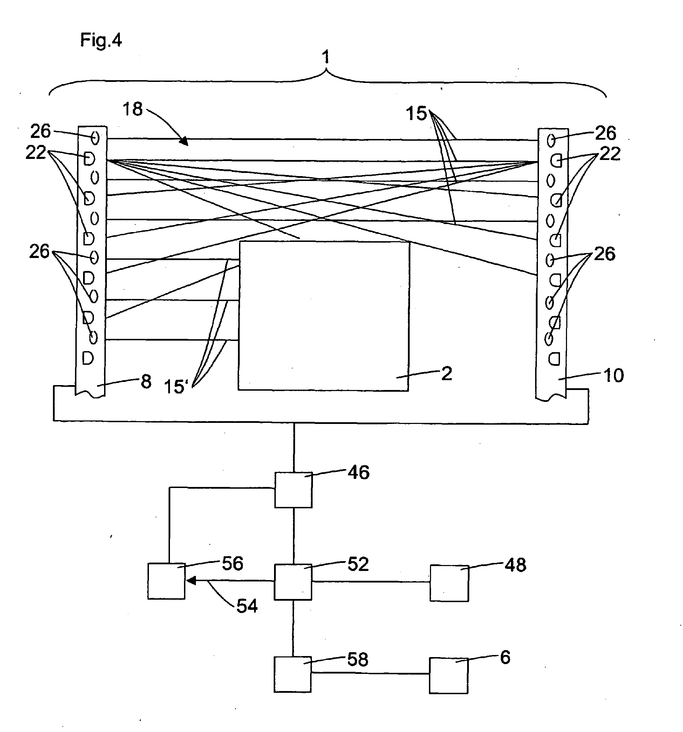

Wie in Figur 4 gegenüber Figur 1 vereinfacht dargestellt, können durch die gesendeten und empfangenen Lichtstrahlen 15 der ersten Optik 22 und der zweiten Optik 26 Objekte 2 durch Unterbrechen dieser Lichtstrahlen 15 erkannt werden. Durch die gesendeten und empfangenen Lichtstrahlen 15 der ersten Optik 22 werden neben der Erkennung der Objekte 2 noch die Konturen der Objekte 2 genauer feststellbar. Dabei werden Lichtstrahlen 15, die von einem Sendeelement 12 ausgehen über die ersten Optiken 22 auf mehrere gegenüberliegende Optiken geleitet. Die gegenüberliegenden Empfangselemente 14 werden ausgewertet und anhand der detektierten Lichtstrahlen 15 und unterbrochenen Lichtstrahlen 15' kann die Kontur des Objektes 2 genau bestimmt werden. Umgekehrt werden die Lichtstrahlen 15 mehrerer unterschiedlicher Sendeelemente 12 von einem Empfangselement 14 ausgewertet.

Zur Erkennung und Vermessung von dem Objekt 2 ist eine Ansteuer- und Auswerteeinheit 46 mit der Sende- und Empfangseinheit 8 und 10 verbunden. Mit dieser Ansteuer- und Auswerteeinheit 46 werden die einzelnen Sendeelemente 12 angesteuert und die Empfangselemente 14 ausgewertet. Um eine Kontur des Objektes 2 genau zu erfassen, werden dazu die Sendeelemente 12 nacheinander angesteuert. Zu jedem angesteuerten Sendeelement 12 werden mehrere nebeneinanderliegende Empfangselemente 14 nacheinander zur Auswertung dieser Lichtstrahlen 15 ausgewertet. Zusätzlich werden zu jeder Auswertung jedes Empfangselementes 14 nacheinander nebeneinanderliegende Sendeelemente 12 aktiviert. Aufgrund dieser Auswertung kann die Kontur des Objektes 2 sehr genau vermessen und Objektkonturdaten erzeugt werden. Querschnitte des Objektes 2 können so sehr viel genauer vermessen werden gegenüber einer einfachen Vermessung mit ausschließlich parallel verlaufenden Lichtstrahlen 15 zwischen der Sendeeinheit 8 und der Empfangseinheit 10. Die erfassten Objektkonturdaten können weiter ausgewertet werden.

In einem Speicher 48 können bekannte Objektkonturdaten als Referenz hinterlegt werden. Diese werden z. B. über geeignete Schnittstellen in den Speicher 48 oder direkt über einen Einlernvorgang eingegeben. Die Objektkonturdaten können dabei eine Toleranz für Objektabmessungen aufweisen, um eine Verfügbarkeit des Lichtgitters 1 zu erhöhen. Die abgespeicherten Objektkonturdaten als Referenz werden in einer Vergleichseinheit 52, die mit dem Speicher 48 und der Ansteuer- und Auswerteeinheit 46, verbunden ist verglichen. Abhängig von dem Vergleich der Objektkonturdaten wird daraus das Objekt 2 als zulässig oder unzulässig eingestuft und daraus ein Steuersignal 54 gebildet.

Das Steuersignal 54 dient zur Steuerung einer Überbrückungseinrichtung 56, die mit der Ansteuer- und Auswerteeinheit 46 verbunden ist. Aufgrund des Ergebnisses der Vergleichseinheit 52 wird mit der Überbrückungseinrichtung 56 die Auswertung der Empfangselemente 14 der zweiten Optik 26 aufgrund des Steuersignals 54 der Vergleichseinheit 52 überbrückt. Die Überbrückungseinrichtung 56 ist dabei zeitlich begrenzt aktiviert. Dadurch wird, nachdem das Objekt 2 das Schutzfeld 18 passiert hat, die Auswertung der Empfangselemente 14 der zweiten Optik 26 wieder aktiviert. Weitere Objekte 2, die sich durch das Schutzfeld 18 bewegen, werden vermessen und bei Feststellen einer unzulässigen Objektkontur wird über eine Schalteinheit 58, die mit der Vergleichseinheit 52 verbunden ist, eine gefahrbringende Bewegung einer Maschine 6 stillgesetzt.

Nach dem beschriebenen Ausführungsbeispiel sind Sende- und Empfangseinheit im Wesentlichen gleich ausgebildet in Bezug auf die ersten und zweiten Optiken. Andere Varianten sind aber ebenfalls möglich. So kann beispielsweise nur die Sendeeinheit die ersten und zweiten Optiken aufweisen, so dass nur das Sendelicht die ersten und zweiten Lichtkeulenformen aufweist. Umgekehrt ist es ebenso möglich, dass die ersten und zweiten Optiken nur in der Empfangseinheit vorgesehen sind und damit nur die Empfangslichtkeulen die genannten Formen haben. Die prinzipielle Funktionsweise des erfindungsgemäßen Lichtgitters zur Objektkonturvermessung mit den Lichtkeulenformen der ersten Art und die Objektdetektion mit den Lichtkeulenformen der zweiten Art bleibt davon unberührt.

### Bezugszeichenliste:

- 1: Lichtgitter
- 2: Objekt
- 6: Maschine
- 8: Sendeeinheit
- 10: Empfangseinheit
- 12: Sendeelemente
- 14: Empfangselemente
- 15, 15': Lichtstrahl
- 16: Ebene
- 18: Schutzfeld
- 22: erste Optik
- 26: zweite Optik
- 28: optische Achse
- 31: erste Sendelichtkeule
- 33: erste Empfangslichtkeule
- 34: zweite Sendelichtkeule
- 35: zweite Empfangslichtkeule
- 42: Optikmodul
- 44: Verbindungsstellen
- 46: Ansteuer- und Auswerteeinheit
- 48: Speicher
- 52: Vergleichseinheit
- 54: Steuersignal
- 56: Überbrückungseinrichtung
- 58: Schalteinheit

## Patentansprüche

1. Lichtgitter zur Vermessung eines Objektes (2) und zur Absicherung eines Gefahrenbereiches einer Maschine (6), bestehend aus
- einer Sendeeinheit (8) mit einzelnen Sendeelementen (12) zum Aussenden einer Mehrzahl in einer Ebene (16) verlaufender Lichtstrahlen (15) in Form von Sendelichtkeulen (31, 34),
- einer zur Sendeeinheit (8) beabstandeten Empfangseinheit (10) mit einzelnen Empfangselementen (14) zum Empfangen der Lichtstrahlen (15) aus Empfangslichtkeulen (33, 35), wodurch zwischen der Sende- und Empfangseinheit (8, 10) ein Schutzfeld (18) definiert ist, wobei
- die Sendeeinheit (8) und/oder die Empfangseinheit (10) jeweils wenigstens zwei verschieden ausgebildete Optiken aufweisen zum Bilden der Sende- und/oder Empfangslichtkeulen (31,33, 34, 35),
- eine zweite Optik (26) eine zweite Sendelichtkeule (34) und/oder eine zweite Empfangslichtkeule (35) bildet mit etwa kreisförmigem Querschnitt und
- die beiden Optiken abwechselnd mit zueinander beabstandeten und mit in etwa in der Ebene (16) liegenden optischen Achsen (28) in der Sendeeinheit (8) bzw. Empfangseinheit (10) angeordnet sind,
- **dadurch gekennzeichnet, dass**
- eine erste Optik (22) eine erste Sendelichtkeule (31) und/oder eine erste Empfangslichtkeule (33) bildet, deren Ausdehnung in Richtung der Ebene (16) eine größere ist als quer dazu.

2. Lichtgitter nach Anspruch 1, **dadurch gekennzeichnet, dass** die erste Optik (22) als Zylinderoptik mit einer Zylinderachse ausgebildet ist.

3. Lichtgitter nach Anspruch 2, **dadurch gekennzeichnet, dass** die Zylinderachsen der Zylinderoptiken parallel und beabstandet voneinander angeordnet sind.

4. Lichtgitter nach einem der vorhergehenden Ansprüche, **dadurch gekennzeichnet, dass** die erste Optik (22) als torische Optik ausgebildet ist.

5. Lichtgitter nach einem der vorhergehenden Ansprüche, **dadurch gekennzeichnet, dass** die erste Optik (22) und/oder die zweite Optik (26) jeweils nur eine Linse aufweisen.

6. Lichtgitter nach einem der vorhergehenden Ansprüche, **dadurch gekennzeichnet, dass** die erste Optik (22) und die zweite Optik (26) einzeln abwechselnd nacheinander angeordnet sind.

7. Lichtgitter nach einem der vorhergehenden Ansprüche, **dadurch gekennzeichnet, dass** die mit der zweiten Optik (22) erzeugte Sende- und/oder Empfangslichtkeule (34, 35) einen Öffnungswinkel von etwa 2° bis 5° aufweist.

8. Lichtgitter nach einem der vorhergehenden Ansprüche, **dadurch gekennzeichnet, dass** zur Reduzierung der Ausdehnung der Sende- und/oder Empfangslichtkeule (34, 35) eine Schlitzblende vorgesehen ist.

9. Lichtgitter nach einem der vorhergehenden Ansprüche, **dadurch gekennzeichnet, dass** wenigstens eine der ersten Optiken (22) und wenigstens eine der zweiten Optiken (26) einstückig zu einem Optikmodul (42) zusammengefasst sind.

10. Lichtgitter nach einem der vorhergehenden Ansprüche, **dadurch gekennzeichnet, dass** die Optikmodule (42) Verbindungsstellen (44) aufweisen zur gegenseitigen Befestigung längs aneinander.

11. Lichtgitter nach einem der vorhergehenden Ansprüche, **dadurch gekennzeichnet, dass** eine Ansteuer- und Auswerteeinheit (46) vorhanden ist, die mit der Sendeeinheit (8) und der Empfangseinheit (10) verbunden ist zur Aktivierung der Sende- und Empfangselemente (12, 14) und die bei Aktivierung eines Sendeelements (12) nacheinander mehrere Empfangselemente (14) auswertet oder umgekehrt.

12. Lichtgitter nach Anspruch 11, **dadurch gekennzeichnet, dass** ein Speicher (48) vorhanden ist, um Objektkonturdaten als Referenzwerte zur Vermessung von Objekten (2) abzuspeichern.

13. Lichtgitter nach Anspruch 12, **dadurch gekennzeichnet, dass** eine Vergleichseinheit (52) vorhanden ist, die mit dem Speicher (48) und der Ansteuer- und Auswerteeinheit (46) verbunden ist, um erfasste Objektkonturdaten mit den gespeicherten Objektkonturdaten zu vergleichen, und abhängig von dem Vergleich mindestens ein Steuersignal (54) auszugeben.

14. Lichtgitter nach einem der Ansprüche 11-13, **dadurch gekennzeichnet, dass** eine Überbrückungseinrichtung (56) vorhanden ist, die mit der Ansteuer- und Auswerteeinheit (46) verbunden ist, um die Auswertung der Empfangselemente (14) der zweiten Optik (26) aufgrund des Steuersignals (54) der Vergleichseinheit (52) zu überbrücken.

15. Lichtgitter nach Anspruch 14 **dadurch gekennzeichnet, dass** die Überbrückungseinrichtung (56) zeitlich begrenzt aktiviert ist.

16. Lichtgitter nach einem der Ansprüche 11-15, **dadurch gekennzeichnet, dass** eine Schalteinheit (58) vorhanden ist, die mit der Vergleichseinheit (52) verbunden ist zur Stillsetzung einer gefahrbringenden Bewegung einer Maschine (6).

## Claims

1. A light grid for measuring an object (2) and securing a dangerous zone of a machine (6) comprising
- a transmitting unit (8) having individual transmitter elements (12) for transmitting a plurality of light beams (15) extending approximately in a plane (16) in the form of transmitted light lobes (31, 34),
- a receiving unit (10) spaced apart from the transmitting unit (8) which has individual receiver elements (14) for receiving light beams (15) from the received light lobes (33, 35), whereby a protected field (18) is defined between the transmitting unit (8) and the receiving unit (10), wherein
- the transmitting unit (8) and/or the receiving unit (10) each have at least two differently formed optical systems, for the forming of the transmitted light lobes (31, 34) and/or the received light lobes (33, 35),
- a second optical system (26) forms a second transmitted light lobe (34) and/ or a second received light lobe (35) having an approximately circular cross-section and
- the two optical systems are alternatingly arranged in the transmitting unit (8) and/or the receiving unit (10) with their optical axes (28) being spaced apart and lying approximately in the plane (16),
- **characterized in that**
- the first optical system (22) forms a first transmitted light lobe (31) and/or a first received light lobe (33), having a greater extent in the direction of the plane than in a direction transverse to the plane.

2. A light grid in accordance with claim 1, **characterized in that** the first optical system is designed as a cylindrical optical system having a cylinder axis.

3. A light grid in accordance with claim 2, **characterized in that** the cylinder axes of the cylindrical optical systems are arranged parallel to and spaced apart from each other.

4. A light grid in accordance with any one of the preceding claims, **characterized in that** the first optical system (22) is formed as a toric optical system.

5. A light grid in accordance with any one of the preceding claims, **characterized in that** the first optical system (22) and/or the second optical system (26) each include only one lens.

6. A light grid in accordance with any one of the preceding claims, **characterized in that** the first optical system (22) and the second optical system (26) are arranged individually and alternatingly after each other.

7. A light grid in accordance with any one of the preceding claims, **characterized in that** the transmitted light lobe (34) and/or the received light lobe (35) generated with the second optical system (26) have an aperture angle in the range between about 2° to about 5°.

8. A light grid in accordance with any one of the preceding claims, **characterized in that** a slit aperture is provided for reducing the extent of the transmitted light lobe (34) and/or the received light lobe (35).

9. A light grid in accordance with any one of the preceding claims,
**characterized in that** at least one of the first optical systems (22) and at least one of the second optical systems (26) are formed in one piece into an optical module (42).

10. A light grid in accordance with any one of the preceding claims, **characterized in that** the optical modules (42) have connection points (44) for mutual connection alongside one another.

11. A light grid in accordance with any one of the preceding claims, **characterized in that** a control and evaluation unit (46) is provided, which is connected to the transmitting unit (8) and the receiving unit (10) to activate the transmitter elements (12) and the receiver elements (14) and which, upon activation of a transmitter element (12), sequentially evaluates a plurality of receiver elements (14) or vice versa.

12. A light grid in accordance with claim 11, **characterized in that** a memory (48) is provided, to store object contour data as reference values for the measurement of objects (2).

13. A light grid in accordance with claim 12, **characterized in that** a comparator (52) is provided, connected to the memory (48) and the control and evaluation unit (46), to compare detected object contour data to the stored object contour data and, in dependence on the comparison, for outputting at least one control signal (54).

14. A light grid in accordance with any one of the preceding claims 11 to 13, **characterized in that** a bridging device (56) is provided, which is connected to the control and evaluation unit (46) to bridge the evaluation of the receiver elements (14) of the second optical system (26) on the basis of the control signal (54) from the comparator (52).

15. A light grid in accordance with claim 14, **characterized in that** the bridging device (56) is activated for a limited time.

16. A light grid in accordance with any one of the preceding claims 11 to 15, **characterized in that** a switching unit (58) is present, which is coupled to the comparator (52) for stopping a potentially endangering movement of a machine (6).

## Revendications

1. Grille lumineuse pour mesurer un objet (2) et pour sécuriser une zone à risque d'une machine (6), comprenant
- une unité d'émission (8) avec des éléments d'émission (12) individuels pour l'émission d'une pluralité de faisceaux lumineux (15) agencés dans un plan (16) sous la forme de lobes de lumière d'émission (31, 34),
- une unité de réception (10) espacée de l'unité de réception (8) avec des éléments de réception (14) individuels pour la réception des faisceaux lumineux (15) provenant de lobes de lumière de réception (33, 35), un champ de protection (18) étant défini entre l'unité d'émission et l'unité de réception (8, 10),
- l'unité d'émission (8) et/ou l'unité de réception (10) présentant chacune au moins deux optiques de conception différente pour la formation des lobes de lumière d'émission et/ou de réception (31, 33, 34, 35),
- une seconde optique (26) formant un second lobe de lumière d'émission (34) et/ou un second lobe de lumière de réception (35) avec une section sensiblement circulaire et
- les deux optiques étant disposées alternativement avec des axes (28) espacés les uns des autres et disposés à peu près dans le plan (16) dans l'unité d'émission (8) ou l'unité de réception (10),
**caractérisée en ce que**
- une première optique (22) forme un premier lobe de lumière d'émission (31) et/ou un premier lobe de lumière de réception (33), dont l'extension dans le sens du plan (16) est plus grande que transversalement à cette direction.

2. Grille lumineuse selon la revendication 1, **caractérisée en ce que** la première optique (22) est conçue comme optique cylindrique avec un axe de cylindre.

3. Grille lumineuse selon la revendication 2, **caractérisée en ce que** les axes de cylindre des optiques de cylindre sont disposés parallèlement entre eux et espacés les uns les autres.

4. Grille lumineuse selon l'une quelconque des revendications précédentes, **caractérisée en ce que** la première optique (22) est conçue comme optique torique.

5. Grille lumineuse selon l'une quelconque des revendications précédentes, **caractérisée en ce que** la première optique (22) et/ou la seconde optique (26) ne présente(nt) chacune qu'une lentille.

6. Grille lumineuse selon l'une quelconque des revendications précédentes, **caractérisée en ce que** la première optique (22) et la seconde optique (26) sont disposées individuellement alternativement l'une après l'autre.

7. Grille lumineuse selon l'une quelconque des revendications précédentes, **caractérisée en ce que** le lobe de lumière d'émission et/ou le lobe de lumière de réception (34, 35) généré(s) avec la seconde optique (22) présente(nt) un angle d'ouverture allant d'environ 2° jusqu'à 5°.

8. Grille lumineuse selon l'une quelconque des revendications précédentes, **caractérisée en ce qu'**un diaphragme à fente est prévu pour la réduction de l'extension du lobe de lumière d'émission et/ou du lobe de lumière de réception (34, 35).

9. Grille lumineuse selon l'une quelconque des revendications précédentes, **caractérisée en ce qu'**au moins l'une des premières optiques (22) et au moins l'une des secondes optiques (26) sont regroupées d'une seule pièce en un module d'optique (42).

10. Grille lumineuse selon l'une quelconque des revendications précédentes, **caractérisée en ce que** les modules d'optique (42) présentent des points de liaison (44) pour la fixation réciproque dans le sens de la longueur les uns sur les autres.

11. Grille lumineuse selon l'une quelconque des revendications précédentes, **caractérisée en ce qu'**une unité d'activation et d'analyse (46) est présente, laquelle est reliée à l'unité d'émission (8) et à l'unité de réception (10) pour l'activation des éléments d'émission et de réception (12, 14) et analyse plusieurs éléments de réception (14) les uns après les autres pour l'activation d'un élément d'émission (12) ou inversement.

12. Grille lumineuse selon la revendication 11, **caractérisée en ce qu'**une mémoire (48) est présente pour stocker des données de contour d'objet comme valeurs de référence pour la mesure d'objets (2).

13. Grille lumineuse selon la revendication 12, **caractérisée en ce qu'**une unité de comparaison (52) est présente, laquelle est reliée à la mémoire (48) et à l'unité d'activation et d'analyse (46), afin de comparer des données de contour d'objet saisies avec les données de contour d'objet mémorisées, et d'éditer au moins un signal de commande (54) en fonction de la comparaison.

14. Grille lumineuse selon l'une quelconque des revendications 11 à 13, **caractérisée en ce qu'**un dispositif de shuntage (56) est présent, lequel est relié à l'unité d'activation et d'analyse (46), afin de shunter l'analyse des éléments de réception (14) de la seconde optique (26) sur la base du signal de commande (54) de l'unité de comparaison (52).

15. Grille lumineuse selon la revendication 14, **caractérisée en ce que** le dispositif de shuntage (56) est activé de façon limitée dans le temps.

16. Grille lumineuse selon l'une quelconque des revendications 11 à 15, **caractérisée en ce qu'**une unité de commutation (58) est présente, laquelle est reliée à l'unité de comparaison (52) pour l'arrêt d'un mouvement entraînant un risque d'une machine (6).
